# EUROPÄISCHE PATENTSCHRIFT

(11) **EP 0 374 550 B1**
(45) Veröffentlichungstag und Bekanntmachung des Hinweises auf die Patenterteilung: **17.08.1994**
(21) Anmeldenummer: 89122237.4
(22) Anmeldetag: 01.12.1989
(51) Int. Cl.: B23Q 39/02, B23Q 1/28

(54) **Anbau-Gerät für z.B. Fräsmaschinen**
Additional device, e.g. for a milling machine
Dispositif additionnel, par exemple pour une fraiseuse

(30) Priorität: 21.12.1988 DE 8815854 U
(43) Veröffentlichungstag der Anmeldung: 27.06.1990
(73) Patentinhaber: MAHO Aktiengesellschaft, D-87459 Pfronten (DE)
(72) Erfinder: Babel, Werner, D-8962 Pfronten (DE); Schwarz, Walter, D-8962 Pfronten (DE)
(74) Vertreter: Beetz & Partner Patentanwälte

(56) Entgegenhaltungen:
- EP-A- 0 139 819
- DE-A- 950 102
- DE-A- 3 131 753
- DE-B- 1 239 542
- GB-A- 1 174 222
- US-A- 2 227 410
- US-A- 4 378 621

## Beschreibung

Die Erfindung betrifft ein Anbaugerät, insbesondere einen Polierkopf od. dgl., zum Anbau an eine Werkzeugmaschine der im Oberbegriff des Patentanspruchs 1 angegebenen Gattung.

Aus der EP-A-139 819 ist ein derartiges Anbaugerät bekannt, das einen auf einem Werkstücktisch befestigten säulenförmigen Ständer enthält, an dem ein Lagerbock manuell höhenverstellbar montiert ist. An einer Seite des konsolenartigen Lagerbocks ist ein Adapter höhenverstellbar angebaut, in welchem eine Drehscheibe um eine horizontale Achse verdrehbar gelagert ist. Diese Drehscheibe trägt einen außermittigen Halter, in den eine Handbohrmaschine manuell eingespannt werden kann. Für komplexe programmgesteuerte Bearbeitungszentren ist dieses Anbaugerät nicht geeignet.

Eine der Zielrichtungen bei der Entwicklung moderner Werkzeugmaschinen und Bearbeitungszentren geht dahin, möglichst viele unterschiedliche Bearbeitungsvorgänge an einem Werkstück in einer einzigen Aufspannung automatisch durchzuführen. Der am häufigsten eingeschlagene Weg zur Verwirklichung derartiger Zielvorstellungen liegt in der Verwendung von Magazinen mit programmgesteuerten Wechselvorrichtungen, welche die Arbeitsspindel mit unterschiedlichen Werkzeugen und/oder den Werkstücktisch mit palettierten Werkstücken entsprechend einem vorgegebenen Programmablauf beschicken.

Einige Bearbeitungsarten, z. B. die Feinbearbeitung der Werkstückoberflächen (Schlichten, Schaben, Polieren), lassen sich jedoch in programmgesteuerte Bearbeitungsabläufe der spanenden Werkstückbearbeitung nicht ohne weiteres integrieren, weil insbesondere die Fein- und Feinst-Bearbeitung von Werkstückoberflächen lange Bearbeitungszeiten erfordert, in denen die Werkzeugmaschine dann nicht für andere Arbeitsvorgänge zur Verfügung steht. Aus diesem Grunde mußten bisher für die Feinbearbeitung von Werkstückoberflächen und ähnliche spezielle Arbeitsvorgänge Sondermaschinen eingesetzt werden. Andererseits gibt es jedoch in jedem Betrieb längere Ruhezeiten, in denen der gesamte Maschinenpark nicht oder nur teilweise genutzt wird, wie z. B. Nachtschichten, Wochenenden und Feiertage.

Aufgabe der Erfindung ist es, ein Anbaugerät, insbesondere einen Polierkopf od. dgl., zu schaffen, das an das Spindelgehäuse einer Fräsmaschine auf einfache Weise angebaut werden kann und verschiedene Bearbeitungsoperationen an einem Werkstück unter Zuhilfenahme der maschineneigenen Antriebsmittel sowie eines eigenen Antriebs ermöglicht.

Die Lösung dieser Aufgabe erfolgt durch die im Patentanspruch 1 angegebenen Merkmale.

Die Erfindung ermöglicht eine weitergehende Nutzung der programmgesteuerten Fräsmaschinen für die langwierige Oberflächenbearbeitung auch komplex geformt er Werkstücke, indem zu Beginn längerer Ruhepausen das Bearbeitungsgerät an den Spindelstock angebaut wird und während der sonstigen Ruhezeit die Bearbeitung vornimmt, und zwar unter Zuhilfenahme der maschineneigenen Bahnsteuerung.

Bei dem Verschwenken des Gerätegehäuses in bestimmte vorgegebene Schräglagen mit Hilfe des Antriebs der Arbeitsspindel können Positionierfehler aufgrund des im Getriebezug der Arbeitsspindel stets vorhandenen Spiels eintreten. Um derartigen Positionierfehlern entgegenzuwirken, sind gemäß der Erfindung zwischen dem Tragkörper und der darin mit Hilfe der Arbeitsspindel verdrehbar gelagerten Drehscheibe Spannelemente angeordnet, die das im Antriebszug der Arbeitsspindel vorhandene Spiel kompensieren und ruckfreie Schwenkbewegungen sowie eine gesicherte Positionierung des Bearbeitungsgeräts in einer eingestellten Schrägstellung gewährleisten. Diese Spannelemente können zweckmäßig einen am Tragkörper befestigten Endring mit darin angeordneten Druckorganen in Form von Magnetspulen oder Druckfedern enthalten, welche gegen die Lagerschale eines Wälzlagers für die Drehscheibe und/oder auch gegen die Drehscheibe mit einer einstellbaren Kraft drücken.

Das erfindungsgemäße Anbaugerät wird an der Stirnseite eines Spindelstocks montiert, in dessen unterem Teil die Horizontalspindel angeordnet ist und der vorzugsweise auf einer 45°-Schrägebene oberhalb der Horizontalspindel einen Schwenkkopf mit einem zwischen einer oberen Ruhestellung und einer Arbeitsstellung verschwenkbaren Vertikal-Fräskopf trägt. Bei einer derartigen Fräsmaschine besteht der Adapter aus einer formsteifen Tragplatte, die in ihrem unteren - der Horizontalspindel gegenüberliegenden - Teil eine teilweise konische Öffnung zur Lagerung der Drehscheibe aufweist und mit ihrem oberen Teil an der vom vertikalen Fräskopf freien Fläche des Schwenkkopfes montiert ist.

Mit dem erfindungsgemäßen Anbaugerät können insbesondere Oberflächen von Werkstücken durch schabenden oder rotierenden Angriff eines Reibwerkzeugs feinbearbeitet werden. Um beispielsweise auch die geneigten Flächen von größeren Hohlräumen in Werkstücken feinbearbeiten zu können, ist es zweckmäßig, am Ende eines zur Spindelachse quer ausgerichteten Schaftes ein plattenförmiges Werkzeug über ein Universalgelenk anzuordnen, welches auf der Werkstückoberfläche drehende, umlaufende oder translatorische Bewegungen ausführt.

Weitere Vorteile und Besonderheiten der Erfindung ergeben sich aus der folgenden Beschreibung eines Ausführungsbeispiels unter Einbeziehung der Zeichnung. Es zeigen:
- Fig. 1: schematisch den vorderen Teil des Spindelstocks einer Universal-Fräsmaschine mit einem Schwenkkopf und dem angebauten Bearbeitungsgerät in teilgeschnittener Darstellung;
- Fig. 2: eine Stirnansicht auf das Arbeitsgerät;
- Fig. 3: vergrößert den Ausschnitt A in Fig. 1;
- Fig. 4 und 5: verschiedene Werkzeugausführungen für das Bearbeitungsgerät.

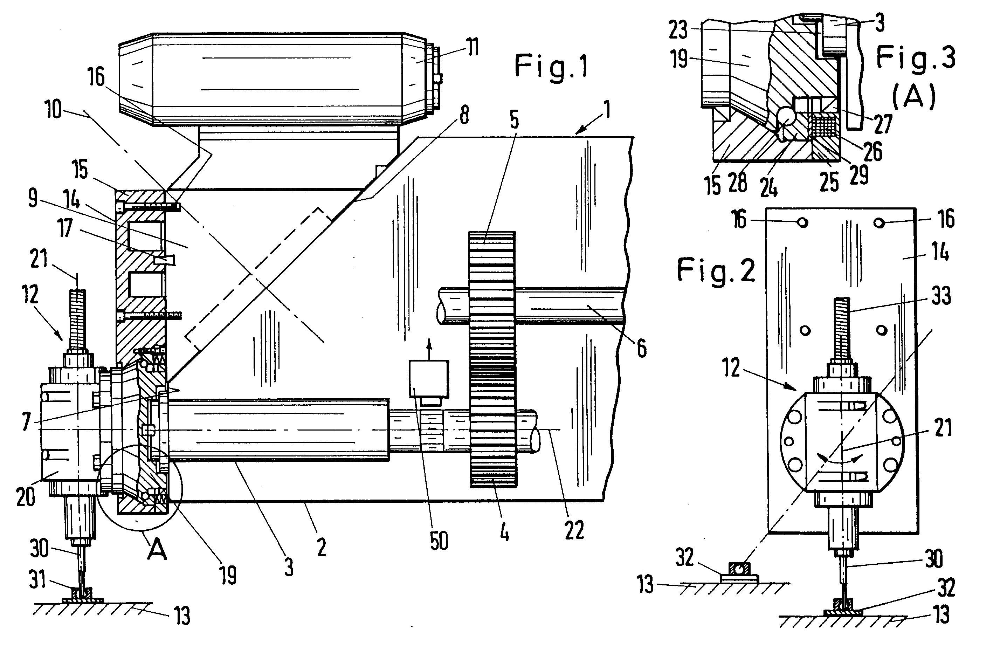

Der Spindelstock nach Fig. 1 ist auf einem - nicht dargestellten - Maschinenständer in horizontaler Richtung verfahrbar montiert. Im unteren Teil des Spindelgehäuses 2 ist eine horizontale Arbeitsspindel 3 gelagert, die über ein Stirnradpaar 4, 5 und eine Hauptwelle 6 von einem - nicht dargestellten - Antrieb, bestehend aus einem Elektromotor und einem Getriebeblock, angetrieben wird. Die Arbeitsspindel 3 ragt mit ihrem vorderen Anschlußende geringfügig über die vertikale Stirnwand 7 des Spindelgehäuses 2 hinaus. Oberhalb dieser vertikalen Stirnwand 7 schließt sich eine Schrägfläche 8 unter einem Winkel von 45° an, auf der ein Schwenkkopf 9 um die 45°-Achse 10 verdrehbar gelagert ist. Dieser Schwenkkopf ist über entsprechende Führungs- und Arretiermittel auf der Schrägfläche 8 verdrehbar festgelegt. In der in Fig. 1 dargestellten Position ist auf der horizontalen Oberfläche des Schwenkkopfes 9 ein weiterer Fräskopf 11 montiert, dessen Einzelteile in dieser Abstellposition nicht in den Arbeitsbereich vor der Stirn des Spindelgehäuses hineinragen. Ein derartiger Spindelstock ist in der DE-PS 29 44 983 beschrieben.

An der Stirnseite des Spindelstocks 1 ist ein Bearbeitungsgerät 12 zur Oberflächenbearbeitung eines Werkstücks 13 mittels eines Adapters 14 angebaut. Bei der dargestellten Ausführung enthält der Adapter 14 eine formsteife Tragplatte 15, die durch mehrere Schraubbolzen 16 und Fixierstifte 17 an der vorderen vertikalen Seite des Schwenkkopfes 9 montiert ist. In einer kreisförmigen Öffnung in dem der horizontalen Arbeitsspindel 3 gegenüberliegenden Unterteil der Tragplatte ist eine Drehscheibe 19 gelagert, an deren vorstehender Stirnseite das Gehäuse 20 des Arbeitsgeräts montiert ist. Die Längsachse 21 dieses Arbeitsgerätes verläuft in einer zur Längsachse 22 der Arbeitsspindel rechtwinkligen Ebene. In einen profilierten Ausschnitt 23 in der Drehscheibe 19 greift die Arbeitsspindel 3 mit ihrem vorstehenden Ende formschlüssig ein, so daß bei einer Verdrehung dieser Arbeitsspindel 3 auch die Drehscheibe 19 zusammen mit dem daran fest angebauten Bearbeitungswerkzeug 12 verdreht wird.

Wie aus der den Ausschnitt A in Fig. 1 in größerem Maßstab zeigenden Fig. 3 ersichtlich, weist die Drehscheibe 19 unmittelbar hinter ihrem kegelförmigen Abschnitt eine torusförmige Lagerfläche für einen Kranz von Kugeln 28 auf, die durch einen Lagerring 24 in der Ausnehmung der Tragplatte 15 gehalten sind. Zwischen diesem Lagerring 24 und einem Endring 25 ist eine Abstimmscheibe 29 angeordnet. Mehrere Druckorgane 26, z. B. Druckfedern und/oder Elektromagneten, sind in dem durch Spannbolzen am Tragkörper 15 festgelegten Endring 25 angeordnet, die über die Abstimm- bzw. Distanzscheibe 29 gegen den Lagerring 24 drücken. Zwischen dem zylindrischen Endteil der Drehscheibe 19 und der inneren Umfangsfläche des Endringes 25 befindet sich ein Abstands- bzw. Dichtungsring 27.

Wie insbesondere aus Fig. 1 ersichtlich, ist die Arbeitsspindel 3 durch den formschlüssigen Eingriff ihres vorstehenden Endes in den entsprechend gestalteten Ausschnitt der Drehscheibe 19 mit letzterer drehfest verbunden, wobei das Bearbeitungsgerät 12 durch eine programmgesteuerte Verdrehung der Arbeitsspindel 3 mittels ihres Antriebs in eine gewünschte Schrägstellung verschwenkt wird, wie sie in Fig. 2 strichpunktiert angedeutet ist. Der Schwenkwinkel wird durch einen Drehgeber bzw. Winkelmesser 50 erfaßt, der am Ende der verlängerten Welle 6 oder - wie dargestellt - an der Arbeitsspindel 3 angebaut sein kann und Positionssignale an die Programmsteuerung der Maschine liefert. Im Gehäuse 20 des Bearbeitungsgeräts 12 ist ein - nicht dargestellter - Antriebsmotor angeordnet, dessen Ausgangswelle ggf. über ein Getriebe mit einem Schaft 30 gekoppelt ist. Der pneumatische oder elektrische Antriebsmotor kann den Schaft 30 und das mit ihm über ein Universalgelenk 31 verbundene scheibenförmige Werkzeug 32 in Drehbewegungen oder in hin- und hergehende Schwingungen versetzen und wird über einen Anschluß 33 entweder mit Druckluft oder mit elektrischem Strom versorgt.

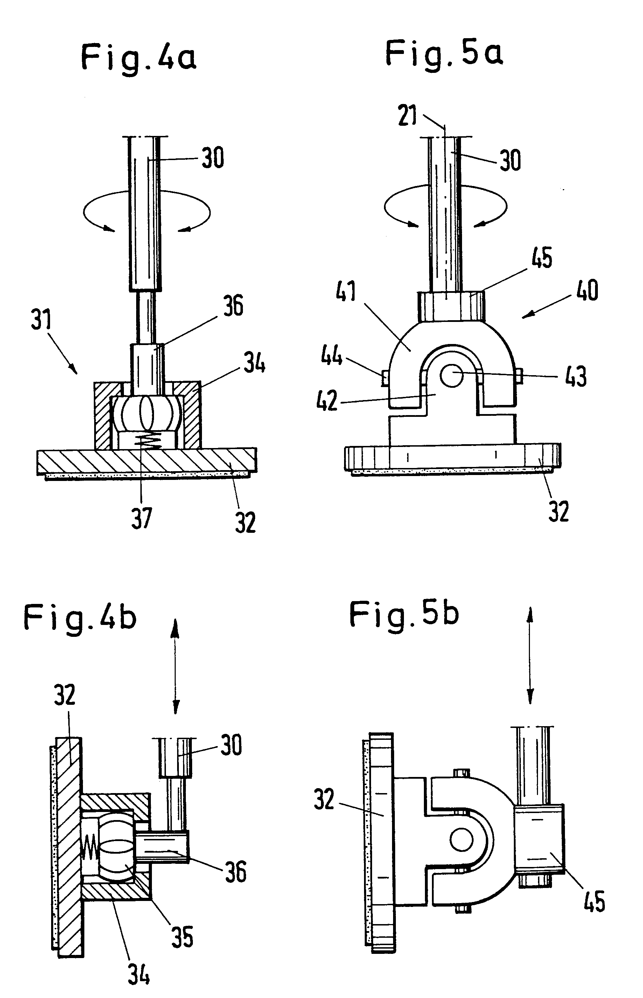

Je nach der Art der Oberflächenbearbeitung können verschiedene Werkzeuge zum Einsatz kommen. In der Ausführung nach Fig. 4a, 4b ist an der einen Schleif-, Polier- oder Läpp-Belag tragenden Werkzeugscheibe 32 ein Gehäuse 34 befestigt, das einen Teil des Universalgelenks 31 bildet. Im Gehäuse 34 ist ein Kugelsegment 35 drehfest und beweglich aufgenommen, das mittels einer Muffe 36 am Schaft 30 befestigt und mittels einer Feder 37 an der gehäuseinneren Oberfläche der Werkzeugscheibe 32 abgestützt ist. In den Fig. 4 und 5 sind zwei mögliche Anschluß- und Bewegungsarten der Werkzeugscheibe dargestellt.

Die Werkzeugausführung nach den Fig. 5a und 5b hat als Universalgelenk ein sog. Kardangelenk 40 mit zwei rechtwinklig versetzt ineinandergreifenden Bügeln 41, 42, die an zwei sich rechtwinklig kreuzenden Bolzen 43, 44 gelagert sind. In der Anordnung nach Fig. 5a ist der Schaft 30 exzentrisch in einer Muffe 45 festgelegt, so daß die Werkzeugscheibe 32 eine umlaufende Kreisbewegung um die Schaftachse 21 ausführt. In der Position nach Fig. 5b ist der Werkzeugschaft 30 in einer Querbohrung des Schafts 45 festgelegt und die Werkzeuganordnung führt translatorische Schwingbewegungen aus.

Die Erfindung ist nicht auf die vorstehend beschriebenen Ausführungen beschränkt. So kann der Adapter 14 statt der gezeigten Tragplatte auch eine andere Halterung für die Drehscheibe 19 mit Spannmitteln aufweisen, die z. B. an einen herkömmlichen Spindelstock - ohne Schwenkkopf - montiert wird. Wesentlich ist, daß die in Fig. 2 dargestellte Verschwenkung des Bearbeitungsgeräts 12 um die möglichst tief liegende Spindelachse 22 praktisch spielfrei durch die horizontale Arbeitsspindel 3 und deren programmgesteuerten Antriebszug erfolgt. An den angebauten Adapter 14 können verschiedenartige Bearbeitungsgeräte, z. B. Polierköpfe oder Vorrichtungen zur elektroerosiven oder zur Ultraschall-Bearbeitung von ggf. beschichteten Werkstücken, angeflanscht werden.

## Patentansprüche

1. Anbaugerät für Werkzeugmaschinen mit einem stirnseitig an einem Bauteil (1) der Werkzeugmaschine montierbaren Adapter (14), einer im Adapter (14) gelagerten Drehscheibe (19) und einem an der Drehscheibe (19) befestigten Bearbeitungsgerät (12),
**dadurch gekennzeichnet,**
daß der Adapter (14) an einem Spindelgehäuse (2) einer Fräsmaschine montierbar ist,
daß die Drehscheibe (19) Kupplungsmittel (23) zur drehfesten Verbindung mit der horizontalen Arbeitsspindel (3) der Fräsmaschine sowie Spannelemente (24-28) für den Spielausgleich aufweist und
daß das Gehäuse (20) des Bearbeitungsgeräts (12) in einer zur Spindelachse (22) senkrechten Querebene verschwenkbar ist.

2. Anbaugerät nach Anspruch 1,
dadurch gekennzeichnet,
daß das Gehäuse (20) des Bearbeitungsgeräts (12) quer zur Spindelachse (22) an der Drehscheibe (19) montiert ist und eine zylindrische Bohrung zur Aufnahme einer Bearbeitungseinheit mit einem separaten Antrieb für ein am Ende eines Schafts (30) gelenkig befestigtes Werkzeug (32) aufweist.

3. Anbaugerät nach einem der Ansprüche 1 oder 2,
dadurch gekennzeichnet,
daß der Adapter (14) als formsteife Platte ausgebildet ist, die in ihrem unteren Teil eine teilweise konische Öffnung zur Aufnahme der Drehscheibe (19) und der Spannelemente (24-28) aufweist und die mit ihrem oberen Teil an einem Schwenkkopf (9) des Spindelstocks (1) montiert ist.

4. Anbaugerät nach Anspruch 1 oder 3,
dadurch gekennzeichnet,
daß die Spannelemente (24-28) einen an dem Adapter (14) befestigten Endring (25), darin gegeneinander winkelversetzt angeordnete Druckorgane (26) und eine Abstimmungsscheibe (29) enthalten, die an der Lagerschale (24) eines Wälzlagers (23) der Drehscheibe (19) mit Druckkontakt anliegt.

5. Anbaugerät nach Anspruch 4,
dadurch gekennzeichnet,
daß die Druckorgane (26) Elektromagneten und/oder Druckfedern sind.

6. Anbaugerät nach einem der Ansprüche 1 bis 5,
dadurch gekennzeichnet,
daß das scheibenförmige Werkzeug (32) zur Feinbearbeitung von Werkstückoberflächen (13) über ein Universalgelenk (31 bzw. 40) mit dem Geräteschaft (30) verbunden ist.

## Claims

1. An attachment unit for machine tools, comprising an adapter (14) for fitting to the end face of a part (1) of the machine tool, a turntable (19) mounted in the adapter (14), and a machining unit (12) secured to the turntable (19), characterised in that the adapter (14) can be fitted to a spindle housing (2) of a milling machine,
in that the turntable (19) has coupling means (23) for connection for rotation to the horizontal work spindle (3) of the milling machine and clamping elements (24 - 28) to compensate for any play and
in that the housing (20) of the machining unit (12) is pivotable in a transverse plane perpendicular to the spindle axis (22).

2. An attachment unit according to claim 1, characterised in that the housing (20) of the machining unit (12) is mounted on the turntable (19) transversely of the spindle axis (22) and has a cylindrical bore to receive a machining unit having a separate drive for a tool (32) pivotally secured to the end of a shank (30).

3. An attachment unit according to claim 1 or 2, characterised in that the adapter (14) is constructed as a dimensionally stable plate, the bottom part of which has a partially conical opening to accommodate the turntable (19) and the clamping elements (24 - 28), and the top part of which is mounted on a pivoting head (9) of the spindle carrier (1).

4. An attachment unit according to claim 1 or 3, characterised in that the clamping elements (24 - 28) comprise an end ring (25) secured to the adapter (14), pressure elements (26) disposed in the end ring at an angular offset to one another, and an adapter disc (29) which bears with pressure contact against the bush (24) of a rolling bearing (23) for the turntable (19).

5. An attachment unit according to claim 4, characterised in that the pressure elements (26) are electromagnets and/or compression springs.

6. An attachment unit according to any one of claims 1 to 5, characterised in that the discoid tool (32) for the precision machining of workpiece surfaces (13) is connected to the unit shank (30) by way of a universal joint (31; 40).

## Revendications

1. Appareil rapporté pour machines-outils, comportant un adaptateur (14) pouvant être monté sur la face frontale d'un élément (1) de la machine-outil, un disque rotatif (19) logé dans l'adaptateur (14) et un appareil d'usinage (12) fixé sur le disque rotatif (19),
caractérisé en ce que l'adaptateur (14) peut être montré sur un boîtier de broche (2) d'une machine à fraiser,
en ce que le disque rotatif (19) présente des moyens d'accouplement (23) pour être relié solidairement en rotation avec la broche (3) horizontale de la machine à fraiser, ainsi que des éléments de serrage (24-28) pour la compensation du jeu,
et en ce que le boîtier (20) de l'appareil d'usinage (12) peut être pivoté dans un plan transversal perpendiculaire à l'axe (22) de la broche.

2. Appareil rapporté selon la revendication 1, caractérisé en ce que le boîtier (20) de l'appareil d'usinage (12) est monté transversalement à l'axe (22) de la broche sur le disque rotatif (19), et en ce qu'il présente un alésage cylindrique pour recevoir une unité d'usinage avec un entraînement séparé pour un outil (32) fixé de manière articulée à l'extrémité d'une tige (30).

3. Appareil rapporté selon l'une quelconque des revendications 1 ou 2, caractérisé en ce que l'adaptateur (14) est formé comme une plaque indéformable qui présente dans sa partie inférieure une ouverture en partie conique pour recevoir le disque rotatif (19) et les éléments de serrage (24-28), et qui est montée avec sa partie supérieure sur une tête pivotante (9) de la poupée porte-fraise (1).

4. Appareil rapporté selon l'une ou l'autre des revendications 1 et 3, caractérisé en ce que les éléments de serrage (24-28) comportent un anneau terminal (25) fixé sur l'adaptateur (14), des organes de pression (26) agencés dans celui-ci en décalage angulaire et une rondelle d'ajustement (29) qui repose en contact sous pression sur le coussinet (24) d'un palier à roulements (23) du disque de rotation (19).

5. Appareil rapporté selon la revendication 4, caractérisé en ce que les organes de pression (26) sont des électroaimants et/ou des ressorts de pression.

6. Appareil rapporté selon l'une quelconque des revendications 1 à 5, caractérisé en ce que l'outil (32) en forme de disque servant au finissage de surfaces (13) de pièces est relié à la tige (30) de l'appareil par une articulation universelle (31 ou 40).
